# EUROPÄISCHE PATENTANMELDUNG

(11) **EP 1 066 889 A2**
(43) Veröffentlichungstag der Anmeldung: **10.01.2001**
(21) Anmeldenummer: 00114645.5
(22) Anmeldetag: 07.07.2000
(51) Int. Cl.: B09C 1/10, C02F 3/06

(54) **Anordnung zur in situ-Entsäuerung schwefelsäuren und/oder schwefelsäurebelasteten Wassers und Bodens**

(30) Priorität: 09.07.1999 DE 19932108
(71) Anmelder: GKSS-FORSCHUNGSZENTRUM GEESTHACHT GMBH, 21502 Geesthacht (DE)
(72) Erfinder: Luther, Günter, 21502 Geesthacht (DE); Elsner, Wolfgang, 21483 Basedow (DE)
(74) Vertreter: Niedmers, Ole, Dipl.-Phys.

(57) **Zusammenfassung**

Es wird eine Anordnung (10) zur in situ-Entsäuerung schwefelsauren und/oder schwefelsäurebelasteten Wassers (11), insbesondere von Tagebaurestseen, vorgeschlagen. Grundsätzlich eignet sich die Anordnung (10) auch zur in situ-Entsäuerung schwefelsauren und/oder schwefelsäurebelasteten Bodens (11), insbesondere von Bergbaukippen.

Die Anordnung (10) umfaßt in einem Wasser- oder Bodenvorrat (11) angeordnete Trägermittel (12), in denen sich Mikroorganismen ansiedeln können, sowie Mittel (13) für die Zufuhr von Mikroorganismen in den Wasser- oder Bodenvorrat (11).

## Beschreibung

Die Erfindung betrifft eine Anordnung zur in situ-Entsäuerung schwefelsauren und/oder schwefelsäurebelasteten Wassers, insbesondere von Tagebaurestseen.

Die Erfindung betrifft ebenfalls eine Anordnung zur in situ-Entsäuerung schwefelsauren und/oder schwefelsäurebelasteten Bodens, insbesondere von Bergbaukippen.

Es ist bekannt, daß durch Bergbauaktivitäten beispielsweise bei der Braunkohlenförderung, der Steinkohleförderung aber auch der Erzförderung sowie der Förderung von Mineralien geologische Strukturen entstehen, bei denen der natürliche Schwefelhaushalt gestört ist. In vielen in- und ausländischen Bereichen sind im Zuge der Förderung von Braunkohle, Steinkohle, Erzen und Mineralien Seen und Bergbaukippen entstanden, die unter ökologischen Gesichtspunkten hochgradige Problembereiche darstellen, die mit gigantischen Umweltschäden einhergehen. Ein Grundprozeß dieser Vorgänge ist beispielsweise die Bildung von Schwefelsäure durch biotische oder abiotische Prozesse. Die Dimensionen derartiger Umweltprobleme werden beispielsweise dadurch deutlich, daß allein in der Bundesrepublik Deutschland insgesamt die zu erwartende Menge an entstandenem und noch entstehendem gelösten Sulfat in Tagebaurestseen und Bergbaukippen auf wenigstens 3 Millionen Tonnen geschätzt werden, wobei die Menge der dadurch entstehenden Schwefelsäure dem Wasserinhalt des zweitgrößten deutschen Sees, nämlich des Starnberger Sees, entspricht.

Zwar ist das Problem schwefelsaurer Seen an sich seit langem bekannt, allerdings mit Ursachen, die überwiegend auf eine allgemeine Luftverschmutzung zurückzuführen sind. Erfahrungen mit regenversauerten Weichwasserseen sind deshalb nur mit großen Einschränkungen auf die sehr andersartigen geogen versauerten Bergbauseen übertragbar. Problemlösungen wie die an diesen Weichwasserseen praktizierten großflächigen Kalkungen sind für geogenversauerte Tagebaurestseen und Bergbaukippen regelmäßig nicht übertragbar.

Es ist somit Aufgabe der vorliegenden Erfindung eine Anordnung der eingangs genannten Art zu schaffen, mit denen in großem Maßstab großvolumige Wässer und/oder großvolumige Böden, insbesondere Tagebaurestseen und Bergbaukippen, effektiv und nachhaltig saniert werden können, um die Wasser- bzw. die Bodenqualität langfristig zu sichern, wobei die Sanierung an sich auf einfache und das Wasser bzw. den Boden schonende Weise durchgeführt werden kann, so daß keine neuen Restprodukte bei der erfindungsgemäßen Behandlung entstehen, die wiederrum Probleme bei der Beseitigung und/oder Lagerung zur Folge hätten, wobei die Anordnung einfach gestaltet werden kann, so daß sie auch in großtechnischem Maßstab kostengünstig Anwendung finden kann, wobei dabei im wesentlichen nur ökologisch verträgliche Elemente eingesetzt werden sollen.

Die Aufgabe wird erfindungsgemäß bei schwefelsaurem und/oder schwefelsäurebelastem Wasser dadurch gelöst, daß die Anordnung in einem Wasservorrat angeordnete Trägermittel umfaßt, in denen sich Mikroorganismen ansiedeln können, sowie Mittel für die Zufuhr von Mikroorganismen in den Wasservorrat.

Die Aufgabe wird erfindungsgemäß bei schwefelsauren und/oder schwefelsäurebelasteten Boden dadurch gelöst, daß die Anordnung in einem Bodenvorrat angeordnete Trägermittel umfaßt, in denen sich Mikroorganismen ansiedeln können, sowie Mittel für die Zufuhr von Mikroorganismen in den Bodenvorrat.

Dadurch, daß erfindungsgemäß Trägermittel vorgesehen sind, kann die Ansiedlung der Mikroorganismen im zu behandelnden Wasser- bzw. Bodenvolumen gezielt vorgenommen werden, wobei es auch möglich ist, diese Trägermittel mit den darauf bzw. darin angesiedelten Mikroorganismen von Zeit zu Zeit aus dem Volumen, in dem dieses angeordnet ist, herauszunehmen, um Aufschluß über die Aktivitäten der Mikroorganismen zu erhalten, mit denen das Trägermittel über das Zufuhrmittel "geimpft" worden ist.

Vorteilhafterweise wird das Trägermittel so beschaffen sein, daß dieses eine poren- bzw. schwammartige Struktur aufweist, so daß in den Poren bzw. in den Schwammhöhlungen eine für die Mikroorganismen milieugerechte Umgebung für Stoffwechsel und Wachstum geschaffen werden kann.

Vorteilhafterweise wird als Trägermittel Stroh eingesetzt, das in gepreßter Form eine porenartige Struktur aufweist und zudem den Vorteil hat, daß aufgrund des naturgemäß hohen Cellulose- und Stärkeanteils eine nährstoffhaltige Umgebung für die Mikroorganismen zur Verfügung steht. Zudem handelt es sich bei Stroh um ein jährlich durch die Vegetationsperiode bedingtes nachwachsendes Mittel, das quasi als Abfallprodukt der Landwirtschaft jährlich in neuen Größtmengen zur Verfügung steht und sich im Wasser und Boden mit der Zeit selbst abbaut.

Bei einer weiteren vorteilhaften Ausgestaltung der Anordnung besteht das Trägermittel aus einer Mehrzahl von gesonderten Trägermitteleinheiten, so daß gezielt mit der Wahl der Anzahl der Trägermitteleinheiten auch gezielt eine quantitative und qualitative Beimpfung der Trägermittel gegebenenfalls vorteilhafterweise auch mit unterschiedlichen Mikroorganismenarten auf einfache Weise möglich ist.

Um sicherzustellen, daß auch bei dieser Ausgestaltung der Anordnung jeder Trägermitteleinheit fortwährend mit dem zu entsäuernden Wasser- bzw. Bodenvolumen in Kontakt kommt, werden die Trägermittel in der Anordnung so angeordnet, daß sie vorteilhafterweise beabstandet voneinander angeordnet sind.

Die Anordnung kann vorteilhafterweise ebenfalls Versorgungsmittel für die Zufuhr von das Wachstum und/oder den Stoffwechsel der Mikroorganismen beeinflussende Mittel aufweisen, über die beispielsweise Nährstoffe für die Mikroorganismen zugeführt werden können, beispielsweise Melasse, die als Abfallprodukt bei der Zuckerherstellung in großem Maße anfällt. Es ist aber auch möglich, über die Zufuhrmittel beispielsweise chemische Desulfurikanten zuzugeben, die den durch die Mikroorganismen bewirkten biologischen Entsäuerungsvorgang des Wasser- bzw. Bodenvolumens chemisch unterstützen.

Um schließlich auch die für die Mikroorganismen optimale Temperatur für deren Stoffwechsel und Teilung fortwährend aufrechtzuerhalten, ist der Wasser- und/oder Bodenvorrat mit einem Temperierungsmittel versehen, beispielsweise in Form von elektrisch betreibbaren Temperierungsmitteln, wobei die dafür erforderliche elektrische Versorgungsspannung beispielsweise von konventionellen oder auch kernkraftbetriebenen Kraftwerken herangeführt werden kann, aber auch durch Windkraftanlagen oder Sonnenkraftanlagen erzeugt herangeführt werden kann. Es ist aber auch möglich, die Temperierungsmittel direkt mit der Abwärme der Kraftwerke zu betreiben.

Es kann sinnvoll sein, gezielt ein bestimmtes Teilvolumen eines Sees bzw. Gewässers zu entsäuern, jeder See oder jedes Gewässer stellt einen Wasservorrat im Sinne der erfindungsgemäßen Verwendung des Begriffs Wasservorrat dar, beispielsweise zu Versuchszwecken, um die Wirksamkeit der Anordnung für die Entsäuerung und die dabei verwendete Methode zu überprüfen. Des weiteren kann es auch sinnvoll sein, nacheinander bestimmte Wasservolumina eines zu entsäuerenden Sees bzw. Gewässers sukzessive zu entsäuern und dabei gezielt frei von Vermischungen mit dem noch nicht entsäuerten Wasser zu sein. Aus diesem Grunde ist es vorteilhaft, daß der zu entsäuernde Wasservorrat in einem Behälter, der in das schwefelsaure und/oder schwefelsäurebelastete Wasser einbringbar ist, aufgenommen wird.

Um nicht aufwendige, schwere und nur mit sehr großem apparativen und kostspieligen Aufwand in dem zu entsäuerenden See bzw. das zu entsäuerende Gewässer einbringbare Behälter im Sinne des vorangehend Gesagten heranschaffen und einbringen zu müssen, ist der Behälter vorzugsweise aus einem folienförmigen Werkstoff hergestellt, der beispielsweise aus einer Metallfolie oder auch aus einer Folie aus Kunststoffwerkstoff bestehen kann. Denkbar sind auch Verbundwerkstoffe aus folienförmigem Kunststoff und folienförmigem Metall.

Ein derartig ausgebildeter Behälter ist vorteilhafterweise derart weitergebildet, daß er in das schwefelsaure und/oder schwefelsäurebelastete Wasser in einem kompakten Zustand einbringbar und im eingebrachten Zustand entfaltbar ausgebildet ist.

Um seine vorbestimmte, konstruktiv an sich frei wählbare Form im zu entsäuernden Wasser fortwährend beizubehalten, beispielsweise in Form eines Zylinders oder eines Würfels oder eines Quaders, weist der Behälter formstabilisierende Mittel auf, mittels derer er nach dem Einbringen in das Wasser in dieser vorbestimmten Form gehalten wird.

Um zu verhindern, daß der Behälter im zu entsäuernden Wasser nach dem Einbringen versinkt, wenn nicht geeignete landgestützte Maßnahmen in Verbindung mit dem Behälter möglich sind, die ein Versinken im Wasser verhindern, weist der Behälter vorteilhafterweise ebenfalls Schwimmittel auf, mit denen er zumindest einen so großen Auftrieb erfährt, daß der zur Wasseroberfläche gerichtete Öffnungsbereich des Behälters so weit aus der Ebene der Wasseroberfläche heraussteht, daß Umgebungswasser nicht in die Öffnung des Behälters eintreten kann.

Die formstabilisierenden Mittel und die Schwimmittel können an sich von einer beliebigen geeigneten Konstruktion sein, d.h. die formstabilisierenden Mittel können beispielsweise aus stangenförmigen Elementen bestehen, die nach dem Auffalten des Behälters im zu entsäuerenden Wasser am Behälter in dafür ausgebildeten Schlaufen und dergleichen eingebracht werden, wobei die Schwimmittel an sich beliebige geeignete Auftriebskörper auch aus Werkstoffen sein können, die ein geringeres spezifisches Gewicht als Wasser haben.

Vorteilhafterweise sind die formstabilisierenden Mittel und/oder die Schwimmittel derart ausgebildet, daß sie eine schlauchförmige Struktur aufweisen und im wesentlichen radial um den Behälter wenigstens teilweise umlaufend ausgebildet sind. Zusätzlich können natürlich auch die vorerwähnten stangenförmigen Stabilisierungselemente vorgesehen werden, wobei die Wahl der formstabilisierenden Mittel der einen oder der anderen Art oder in Form von Kombinationen beider vorbeschriebener Mittel regelmäßig auch von der Größe des Behälters und dem Volumen sowie der gewählten Behälterform abhängt.

Sind die formstabilisierenden Mittel und die Schwimmmittel in Form schlauchförmiger Strukturen ausgebildet, die schon mit dem folienförmigen Behälterkörper im Zuge seiner Herstellung ausgebildet sein können, werden die formstabilisierenden Mittel und/oder die Schwimmittel mittels gasförmiger oder flüssiger Medien gefüllt, und zwar bei einem vorbestimmten Druck, so daß dadurch einerseits ein gewünschter Auftrieb und andererseits eine gewünschte Formstabilität des Behälters erreicht wird.

Die Anordnung kann durch folgende Schritte betrieben werden:
a. Ermittlung der Belastung in einem Normvolumen des Wassers oder des Bodens,
b. Festlegung der Art und Menge von Mikroorganismen, die Sulfat und/oder Sulfid mit hoher spezifischer Geschwindigkeit reduzieren, unter Berücksichtigung der ermittelten Belastung nach Schritt a.,
c. Eingeben der gemäß Schritt b. festgelegten Art und Menge der Mikroorganismen in das Wasser oder den Boden und
d. Zufuhr wenigstens eines das Wachstum und/oder den Stoffwechsel der Mikroorganismen fördernden Mittels in das Wasser oder den Boden.

Dabei sind keine ökologisch unbedenklichen Mittel bzw. Prozeßschritte zum Betrieb der Anordnung notwendig. Alle Prozeßschritte, insbesondere die Zugabe der Mikroorganismen in das Wasser bzw. den Boden, sind ökologisch und biologisch verträglich, d.h. es entstehen bei der Prozeßführung auch in großtechnischem Sinne keine Stoffe, die wiederrum renaturiert, gesondert entsorgt oder deponiert werden müßten, wobei der Prozeß sich aufgrund der Vermehrungsfähigkeit der Sulfat und/oder Sulfid abbauenden Mikroorganismen quasi selbst ernährt, bis das vorbestimmte Wasser- bzw. Bodenvolumen soweit entsäuert ist, daß es als natürlicher Lebensraum der tierischen und pflanzlichen natürlichen Bewohner des Wassers bzw. des Bodens wiederrum zur Verfügung steht.

Die ausgewählten Mikroorganismen sind regelmäßig vorteilhafterweise wenigstens teilweise acidotolerant oder vorteilhafterweise wenigstens teilweise acidophil, wobei es auch vorteilhaft sein kann, ein Gemisch aus Mikroorganismen bereitzustellen, die sowohl acidotolerant als auch acidophil sind.

Vorzugsweise werden als Mikroorganismen Bakterien der Gattung Thiobacillus ausgewählt, die bekanntermaßen zum Abbau saurer Milieus hervorragend geeignet sind.

Daneben kann es vorteilhaft sein, neben den acidotoleranten und/oder acidophilen Bakterien auch solche Mikroorganismen zusätzlich einzusetzen, die allgemein als Eisenbakterien bekannt sind. Zur Gattung der Eisenbakterien gehört eine Vielzahl dieser Spezies. Vorzugsweise können als Eisenbakterien zur Ausführung des erfindungsgemäßen Verfahrens Gallionella ferruginea und/oder Leptothrix ochracea und/oder Cladothrix dichotoma und/oder Thiobacillus ferrooxidans und/oder Thiobacillus thiooxidans verwendet werden, wobei die letzteren vorzugsweise auch acidophil sind.

Je nach Beschaffenheit und geographischer Lage des zu behandelnden Wasservolumens oder des zu behandelnden Bodens finden die Mikroorganismen naturgemäß unterschiedliche thermische Bedingungen vor. Um eine Auswahl der Mikroorganismen speziell auch unter Berücksichtigung der anzutreffenden thermischen Bedingungen vorzunehmen, um ein optimales Milieu für die Mikroorganismen zu schaffen, werden die Mikroorganismen in Abhängigkeit des bei vorgegebenen Temperaturen des Wassers oder Bodens erwartbaren maximalen Wachstums und/oder der Stoffwechselaktivitäten ausgewählt werden.

Es sind für die Prozeßführung auch Fälle denkbar, bei denen eine Auswahl der Mikroorganismen unter der erwartbaren Temperaturbedingungen nur mit einer sehr großen Schwankungsbreite möglich ist. Derartige Fälle sind erwartbar in geographischen Lagen, bei denen normalerweise ausgeprägte Sommer- und Winterperioden auftreten. Für diese Fälle ist es vorteilhaft, eine Prozeßführung derart zu wählen, daß dem Wasser oder dem Boden von außen Wärme zugefügt wird, um das thermisch optimale Milieu für den Stoffwechsel und das Wachstum der Mikroorganismen fortwährend zu gewährleisten. Diese Wärme kann beispielsweise bereitgestellt werden aus der Abwärme von mit fossilen Brennstoffen und durch kernkraftbetriebene Kraftwerke, durch Sonnenenergie aber auch durch Windenergie bzw. Kombinationen der voraufgeführten Energielieferanten.

Um gegebenenfalls das Wachstum und den Stoffwechsel der ausgewählten Mikroorganismen im zu behandelnden Wasservolumen und Boden zu optimieren, kann es vorteilhaft sein, dem Wasser oder Boden das Wachstum und/oder den Stoffwechsel der Mikroorganismen beeinflussende Mittel zuzugeben, d.h. im weitesten Sinne auch als Nährmittel wirkende Additive.

Gleichermaßen kann es auch vorteilhaft sein, in das Wasser oder den Boden chemische Desulfurikanten zuzugeben, mit denen die durch die Mikroorganismen zu leistende Entsäuerung des Wasservolumens bzw. des Bodenvolumens unterstützt werden kann.

Die Erfindung wird nun unter Bezugnahme auf die nachfolgenden Zeichnung im einzelnen eingehend beschrieben. Diese zeigen:
- Fig. 1: schematisch den Aufbau einer Anordnung, mit der ein Verfahren zur in situ-Entsäuerung schwefelsauren und/oder schwefelsäurebelasteten Wassers und/oder Bodens ausführbar ist,
- Fig. 2: in der Seitenansicht einen Behälter, der mit formstabilisierenden Mitteln und mit Schwimmmitteln versehen ist und der einen im wesentlichen kreisförmigen Horizontalquerschnitt aufweist,
- Fig. 3: den in Fig. 2 dargestellten Behälter in der Draufsicht, jedoch nur eine Hälfte der kreisförmigen Struktur zeigend, und
- Fig. 4: in der Seitenansicht den Behälter gemäß Fig. 2, jedoch stark schematisiert, im Einsatz in einem zu reinigenden See bzw. Gewässer, im Zusammenwirken mit einem Steg bzw. einer Arbeitsplattform und Mitteln für die Zufuhr von Energie zum Betrieb der Anordnung bzw. des Verfahrens zur in situ-Entsäuerung schwefelsauren und/oder schwefelsäurebelasteten Wassers, wobei der Behälter bis auf den Gewässer- bzw. Seeboden reicht.

Eine Anordnung 10, die beispielsweise dazu dienen kann, einen Prozeß zur in situ-Entsäuerung schwefelsauren und/oder schwefelsäurebelasteten Wassers 11 und/oder Bodens 11, insbesondere von Tagebaurestseen und Bergbaukippen, zu führen, ist beispielsweise in der einzigen Figur dargestellt. Es wird davon ausgegangen, daß der Wasser- oder Bodenvorrat 11 bei der Anordnung 10 an sich ein geschlossenes Volumen darstellt, von geringen Zu- und Abläufen, die im Vergleich zum Volumen des Wasser- oder Bodenvorrats 11 nur einen definitionsgemäß geringen Anteil ausmachen sollen, abgesehen. In der Realität sind der Wasser- oder Bodenvorrat 11 Tagebaurestseen bzw. Bergbaukippen, die schwefelsauer bzw. schwefelsäurebelastet sind. Es ist aber auch möglich, die Anordnung 10 so zu betreiben, daß sie zunächst, beispielsweise für einen Laborversuch, ein begrenztes Volumen aufweisen, beispielsweise ein Volumen von 5.000 m³. Diese Angabe ist allerdings ausdrücklich nur beispielhaft zu verstehen, denn erfindungsgemäß sind Größenbegrenzungen des zu behandelnden Wasser- oder Bodenvolumens weder angestrebt noch notwendig. Das in der einzigen Figur dargestellte Volumen des Wasser- oder Bodenvorrats 11 kann somit beispielsweise einen Tagebaurestsee oder beispielsweise eine Bergbaukippe repräsentieren. Wird der Wasservorrat 11 beispielsweise durch einen Tagebaurestsee gebildet, wird das Wasservolumen 11 mit einem Trägermittel 12 versehen, in dem sich Mikroorganismen ansiedeln können. Gegebenenfalls können auch mehrere Trägermittel 12, die geeignet voneinander beabstandet sind, darin angeordnet werden. Das Trägermittel 12 ist im wesentlichen flächig ausgebildet und sollte den Boden des Tagebaurestsees normalerweise vollständig, wenigstens aber große Teile davon bedecken.

Da es sich beispielsweise bei Tagesbaurestseen regelmäßig um ruhende Gewässer handelt, die allerhöchstens einen geringen Zufluß und Abfluß an Wasser haben, sind in dem Wasservorrat 11 hier nicht gesondert dargestellte Bewegungsmittel vorgesehen, die bewirken sollen, daß mit einer festlegbaren Minimalgeschwindigkeit das zu entsäuernde Wasser 11 über die dem Wasser 11 zugewandten Seiten des Trägermittels 12 streicht und soweit wie möglich in dieses eindringt. Das Trägermittel 12 weist eine poren- oder schwammartige Struktur auf und kann vorzugsweise aus gepreßtem Stroh bestehen, das als nachwachsendes Abfallprodukt aus der Landwirtschaft fortwährend in großen Mengen zur Verfügung steht.

Über ein Zufuhrmittel 13 werden Mikroorganismen von einem hier nicht dargestellten Vorrat in das Wasser 11 bzw. in das Trägermittel 12 geleitet. Durch Zugabe von Nährmitteln über ein Versorgungsmittel 14 beliebig aufgebauter Art, beispielsweise in Form eines Rohrleitungssystems oder dergleichen, wird ein auf die Förderung des Wachstums und/oder des Stoffwechsels der Mikroorganismen abgestelltes Nährmittel in das Wasser 11 gegeben. Hier nicht dargestellte Temperierungsmittel, die ihre Energie aus konventionellen Kraftwerken, kernkraftbetriebenen Kraftwerken, aus Sonnenenergie oder Windenergie oder beliebigen Kombinationen dieser Energielieferanten beziehen können, sorgen dafür, daß eine das Wachstum und den Stoffwechsel der Mikroorganismen, wenn sie im Trägermittel 12 angeordnet sind, fördernde Umgebungstemperatur eingehalten wird. Dadurch ist beispielsweise auch in geographischen Bereichen, in denen ausgeprägte Sommer- und Winterperioden gang und gäbe sind, dafür gesorgt, daß fortwährend über das Jahr der Stoffwechsel und das Wachstum der Mikroorganismen weitgehend optimiert aufrechterhalten werden kann.

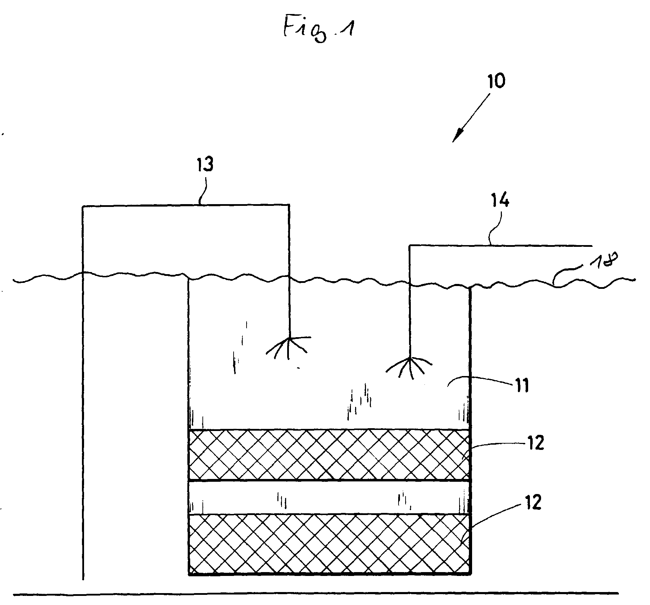

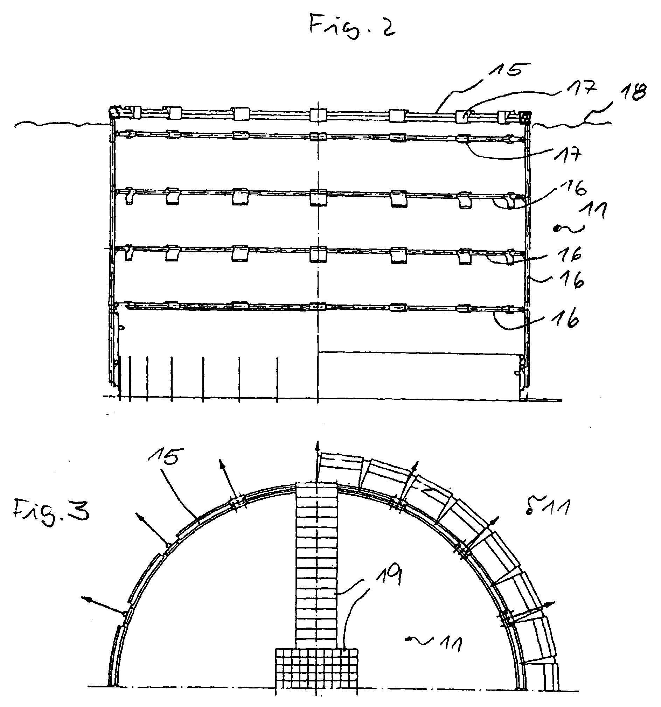

Der in Fig. 2 dargestellte Behälter 15 kann in ein zu entsäuerendes Gewässer bzw. einen zu entsäuernden See, See, Gewässer und Wasservorrat 11 sollen hier gleichbedeutend für ein schwefelsaures bzw. schwefelsäurebelastetes Wasservolumen stehen, eingebracht werden. D.h., daß der Behälter 15 dann den Wasservorrat aufnimmt, der zu entsäuern ist. Grundsätzlich kann der Behälter 15 auf beliebige Weise ausgebildet sein. Es muß lediglich sichergestellt werden, daß er wasserundurchlässig ist, so daß Wasser vom umgebenden Wasservorrat 11 nicht unkontrolliert in das vom Behälter 15 eingeschlossene Volumen eindringen kann und auch daraus nicht nach außen wiederum in den Wasservorrat 11 zurückfließen kann. Der Behälter 15 besteht aus folienförmigem Werkstoff, vorzugsweise einem Kunststoffwerkstoff wie PVC und dergleichen. Der Behälter 15 ist in seiner Grundstruktur hier zu einem kompakten Paket zusammenfaltbar und ist, nachdem er in das zu entsäuernde Wasser 11 geeignet eingebracht worden ist, auffaltbar, so daß er die in den Fig. 2 bis 4 dargestellte Form einnimmt. Dazu können aufblasbare Körper in den durch den Behälter gebildeten Innenraum bzw. das Innenvolumen des Behälters eingebracht werden, so daß nach dem Einbringen des Behälters 15 das dort sich zunächst unkontrolliert befindende Wasser langsam verdrängt wird, bis die Grundstruktur des Behälters 15 hergestellt ist, wobei dann der Behälter wieder langsam geflutet wird, bis er auf vorbestimmte Weise und Tiefe in den Wasservorrat 11 eintaucht.

Um die Form des Behälters 15 zu stabilisieren, sind Stabilisierungsmittel 16 vorgesehen und Schwimmittel 17. Die formstabilisierenden Mittel 16 und die Schwimmittel 17 sind in Form von Schläuchen ausgebildet, die mittels gasförmiger Medien für die Schwimmittel 17 und mittels Wasser für die Stabilisierungsmittel 16, jeweils unter geeignet gewähltem Druck, gefüllt werden können.

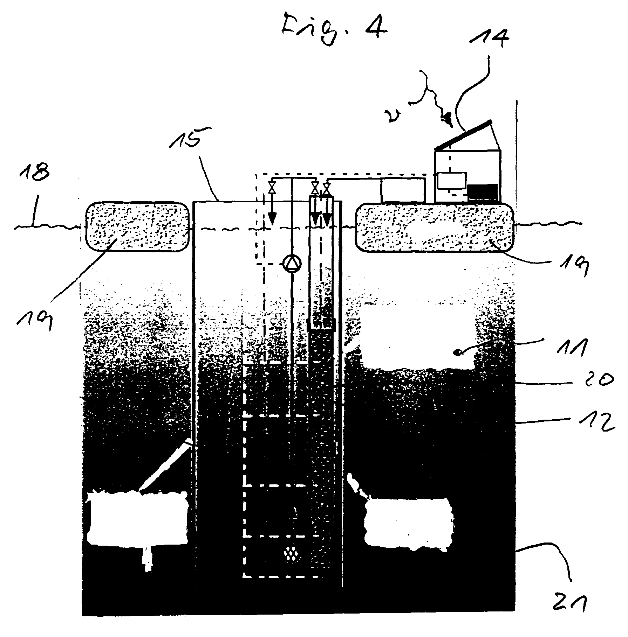

Im aufgefalteten Zustand des Behälters, vergleiche Fig. 3, können auch noch Stege bzw. Arbeitsplattformen 19 vorgesehen sein, um beispielsweise zentral im Behälter 15 Meßproben entnehmen zu können und Überwachungs- und Steuerungsfunktionen für den bestimmungsgemäßen Betrieb der Anordnung 10 von dort aus zentral vornehmen zu können.

Es wird in diesem Zusammenhang auch auf Fig. 4 verwiesen, wo der Behälter 15 einen Reaktor 20, der vertikal im Behälter 15 aufgenommen ist, aufweist. In diesem Falle sind im Reaktor 20 die Trägermittel 12, beispielsweise Stroh und dergleichen, aufgenommen. Die für den bestimmungsgemäßen Betrieb der Anordnung 10 benötigte Energie wird hier mittels einer fotovoltarischen Einrichtung bereitgestellt, vergleiche das dortige Versorgungsmittel 14, das schematisch Sonnenkollektoren zeigt.

Der Behälter 15 kann hier nicht dargestellte Ein- und Auslässe aufweisen, um in den Behälter 15 das Wasser des umgebenden Wasservorrats 11 einbringen zu können und das ein Behälter 15 entsäuerte Wasser an die Umgebung abgeben oder zu anderen Wiederverwendungszwecken abpumpen zu können.

Ein Prozeß, der mittels der vorbeschriebenen Anordnung 10 zur in situ-Entsäuerung schwefelsauren und/oder schwefelsäurebelasteten Wassers 11 und/oder Bodens 11 betrieben werden kann, arbeitet folgendermaßen:
Zunächst wird die Belastung des Wassers oder des Bodens anhand eines Normvolumens in bezug auf den Grad der Versäuerung bzw. den Grad der Belastung der mit Schwefelsäure bestimmt.
Nachfolgend wird die Art und Menge von Mikroorganismen festgelegt, die Sulfat und/oder Sulfid und gegebenenfalls auch Eisen mit hoher spezifischer Geschwindigkeit reduzieren können. Dieses geschieht unter Berücksichtigung der zuvor ermittelten Säurebelastung des Wassers und/oder Bodens anhand eines Normvolumens.
Dann werden die auf vorangehend beschriebene Weise festgelegte Art und Menge der Mikroorganismen in das Wasser oder den Boden gegeben.
Schließlich wird dann die Zufuhr wenigstens eines das Wachstum und/oder den Stoffwechsel der Mikroorganismen fördernden Mittels in das Wasser oder den Boden veranlaßt, beispielsweise Melasse, die in großen Mengen bei der Zuckerherstellung anfällt. Die ausgewählten Mikroorganismen werden regelmäßig, da sie wenigstens teilweise acidophil sein müssen, der Gattung Thiobacillus angehören. Gegebenenfalls können auch zusätzlich Eisenbakterien hinzugegeben werden, die der Gattung Thiobacillus ferrooxidans und/oder Thiobacillus thiooxidans angehören.
Gegebenenfalls können dem Wasser 11 oder dem Boden 11 auch noch chemischen Desulfurikanten als den Entsäuerungsprozeß unterstützende Mittel hinzugegeben werden.

Der Prozeß kann noch dadurch in seiner Effektivität unterstützt werden, daß dem Wasser 11 oder dem Boden, wie es oben im Zusammenhang mit der Beschreibung der Anordnung 10 dargelegt worden war, Wärme zugeführt werden, um ein optimales Milieu für die Mikroorganismen für das Wachstum und den Stoffwechsel bereitzustellen. Wird ein Behälter 15 zur Entsäuerung des darin aufgenommenen Wassers 11 verwendet, siehe oben, kann sukzessive der gesamte Wasservorrat 11 eines Sees oder Gewässers durch den Behälter 15 geführt, dort verfahrensmäßig zur Entsäuerung behandelt, und wiederum in den Wasservorrat 11 zurücküberführt werden, so daß der Wasservorrat 11 am Ende insgesamt entsäuert ist.

### Bezugszeichenliste

- 10: Anordnung
- 11: Wasser- oder Bodenvorrat (Wasser oder Boden)
- 12: Trägermittel
- 13: Zufuhrmittel (Mikroorganismen)
- 14: Versorgungsmittel
- 15: Behälter
- 16: formstabilisierendes Mittel
- 17: Schwimmittel
- 18: Wasseroberfläche
- 19: Steg/Arbeitsplattform
- 20: Reaktor
- 21: Gewässer- bzw. Seeboden

## Patentansprüche

1. Anordnung zur in situ-Entsäuerung schwefelsauren und/oder schwefelsäurebelasteten Wassers, insbesondere von Tagebaurestseen, dadurch gekennzeichnet, daß diese in einem Wasservorrat (11) angeordnete Trägermittel (12) umfaßt, in denen sich Mikroorganismen ansiedeln können, sowie Mittel (13) für die Zufuhr von Mikroorganismen in den Wasservorrat (11).

2. Anordnung zur in situ-Entsäuerung schwefelsauren und/oder schwefelsäurebelasteten Bodens, insbesondere von Bergbaukippen, dadurch gekennzeichnet, daß diese in einem Bodenvorrat (11) angeordnete Trägermittel (12) umfaßt, in denen sich Mikroorganismen ansiedeln können, sowie Mittel (13) für die Zufuhr von Mikroorganismen in den Bodenvorrat (11).

3. Anordnung nach einem oder beiden der Ansprüche 1 oder 2, dadurch gekennzeichnet, daß das Trägermittel (12) eine schwammartige Struktur aufweist.

4. Anordnung nach einem oder beiden der Ansprüche 1 oder 2, dadurch gekennzeichnet, daß das Trägermittel (12) Stroh ist.

5. Anordnung nach einem oder mehreren der Ansprüche 1 bis 4, dadurch gekennzeichnet, daß das Trägermittel (12) aus einer Mehrzahl von gesonderten Trägermitteleinheiten besteht.

6. Anordnung nach Anspruch 5, dadurch gekennzeichnet, daß die Trägermitteleinheiten beabstandet voneinander angeordnet sind.

7. Anordnung nach einem oder mehreren der Ansprüche 1 bis 6, dadurch gekennzeichnet, daß diese Versorgungsmittel (14) für die Zufuhr von das Wachstum und/oder den Stoffwechsel der Mikroorganismen beeinflussende Mittel aufweist.

8. Anordnung nach einem oder mehreren der Ansprüche 1 bis 7, dadurch gekennzeichnet, daß der Wasser- und/oder der Bodenvorrat (11) mit Temperierungsmitteln versehen ist bzw. sind.

9. Anordnung nach einem oder mehreren der Ansprüche 1 bis 8, dadurch gekennzeichnet, daß der Wasservorrat (11) in einen Behälter (15), der in das schwefelsaure und/oder schwefelsäurebelastete Wasser einbringbar ist, aufgenommen wird.

10. Anordnung nach Anspruch 9, dadurch gekennzeichnet, daß der Behälter (15) aus einem folienförmigen Werkstoff besteht.

11. Anordnung nach Anspruch 10, dadurch gekennzeichnet, daß der Werkstoff ein Kunststoffwerkstoff ist.

12. Anordnung nach einem oder mehreren der Ansprüche 9 bis 11, dadurch gekennzeichnet, daß der Behälter (15) in das schwefelsaure und/oder schwefelsäurebelastete Wasser in einem kompakten Zustand einbringbar und im eingebrachten Zustand entfaltbar ausgebildet ist.

13. Anordnung nach einem oder mehreren der Ansprüche 9 bis 12, dadurch gekennzeichnet, daß der Behälter (15) formstabilisierende Mittel (16) aufweist.

14. Anordnung nach einem oder mehreren der Ansprüche 9 bis 12, dadurch gekennzeichnet, daß der Behälter (15) Schwimmittel (17) aufweist.

15. Anordnung nach einem oder beiden der Ansprüche 13 oder 14, dadurch gekennzeichnet, daß die formstabilisierenden Mittel (16) und/oder die Schwimmittel (17) eine schlauchförmige Struktur aufweisen und radial um den Behälter (15) umlaufend ausgebildet sind.

16. Anordnung nach einem oder mehreren der Ansprüche 13 bis 15, dadurch gekennzeichnet, daß die formstabilisierenden Mittel (16) und/oder die Schwimmittel (17) durch gasförmige und/oder flüssige Medien gefüllt werden können.
